# EUROPÄISCHE PATENTSCHRIFT

(11) **EP 4 069 507 B1**
(45) Veröffentlichungstag und Bekanntmachung des Hinweises auf die Patenterteilung: **11.10.2023**
(21) Anmeldenummer: 20820811.6
(22) Anmeldetag: 03.12.2020
(51) Int. Cl.: B32B 5/02, B32B 15/14, B32B 15/08, B32B 27/12, B32B 27/20

(54) **LAMINAT**
LAMINATE
STRATIFIÉ

(30) Priorität: 04.12.2019 DE 102019132953
(43) Veröffentlichungstag der Anmeldung: 12.10.2022
(73) Patentinhaber: 3A Composites GmbH, 49090 Osnabrück (DE)
(72) Erfinder: BECHER, Christoph, 78224 Singen (DE); MAYER, Michael, 78224 Singen (DE)
(74) Vertreter: Patent- und Rechtsanwälte Behrmann Wagner PartG mbB
(86) Internationale Anmeldenummer: PCT/EP2020/084471
(87) Internationale Veröffentlichungsnummer: WO 2021/110837

(56) Entgegenhaltungen:
- EP-A1- 3 540 145
- WO-A1-2013/113734
- US-A1- 2007 207 301

## Beschreibung

### Technisches Gebiet

Die Erfindung betrifft ein Laminat, aus dem platten- bzw. kassettenförmige Elemente hergestellt werden können, die insbesondere im Bereich der Innen- und Außenverkleidung von Wänden bei Gebäuden Verwendung finden.

### Stand der Technik

Aus der WO 2013/113734 A1 ist ein Laminat bekannt, das einen Kern aus einem Polymer aufweist. Der Kern ist beidseitig mit metallischen Deckschichten bedeckt, wobei die Deckschichten jeweils über eine wenigstens eine Polymerschicht aufweisende Klebeschicht mit dem Kern verbunden sind. Weiterhin weist die Klebeschicht zusätzlich eine Schicht aus einem Vliesstoff auf, der aus nicht brennbaren Fasern besteht, wobei die Fasern einen Schmelzbereich haben, der über dem Schmelzpunkt des Materials der Deckschichten liegt, wobei die Schicht aus Vliesstoff zur Verfestigung der Fasern Bindemittel enthält oder thermisch verfestigt ist, und wobei die Schicht aus Vliesstoff eine Beschichtung bzw. eine Schlichte zur Erhöhung der Adhäsion gegenüber der wenigstens einen Polymerschicht der Klebeschicht aufweist. Die Glasfasermatte wird durch das aufschäumende Reaktionsgemisch durchtränkt, und durch dieses gegen die Innenseite der Deckschicht verklebt. Weiterhin härtet das Reaktionsgemisch gleichzeitig oder anschließend zum Schaumstoffkörper aus.

Weiterhin sind aus der EP 3 540 145 A1 sowie der US 2007/207301 A1 Füllstoff enthaltende Kernschichten aus thermoplastischem Polymer bekannt.

Aus dem Produktportfolio der Anmelderin ist ein Laminat mit der Bezeichnung ALUCOBOND^{®} bekannt. Das bekannte Laminat besteht aus einem Kern, dessen Material ein thermoplastisches Polymer aufweist. Der Kern ist beidseitig über jeweils eine Klebeschicht, die wenigstens eine Polymerschicht aufweist, mit einer metallischen Deckschicht verbunden. Die Deckschicht besteht üblicherweise aus einem Aluminiumblech mit einer Dicke von typischerweise nicht mehr als 1,0mm.

Aufgrund gesetzlicher Erfordernisse ist es für bestimmte Länder erforderlich, dass bei der Verwendung derartiger Laminate zur Verkleidung von Gebäuden die aus dem Laminat ausgebildeten Elemente eine bestimmte Mindestbrandbeständigkeit aufweisen. Diese Mindestbrandbeständigkeit bedeutet insbesondere, dass die Brandausbreitung verzögert wird und keine Bestandteile brennend herunterfallen oder abtropfen.

### Offenbarung der Erfindung

Das erfindungsgemäße Laminat mit einem Kern aus einem thermoplastischen Polymer mit den Merkmalen des Anspruchs 1 hat den Vorteil, dass es eine gegenüber dem Stand der Technik erhöhte bzw. verbesserte Brandbeständigkeit aufweist. Insbesondere verzögert, reduziert oder verhindert das erfindungsgemäße Laminat eine Delamination der Deckschichten oder ein Herausrutschen der Kernbestandteile im Brandfall und damit ein Herabfallen oder Abtropfen von Produktbestandteilen. Dies dient im Brandfall am Gebäude der Vermeidung oder Verzögerung der Ausbreitung eines Gebäudebrandes, da Sekundärbrände durch herunterfallende brennende Bestandteile verhindert werden. Ebenso ist die Vermeidung von herabfallenden Teilen für die sichere Evakuierung der Gebäudebewohner und die Arbeit der Rettungskräfte elementar.

Der Erfindung liegt die Idee zugrunde, durch Zwischenlage einer aus schwer entflammbaren Fasern bestehenden Vliesschicht und weiterer Spezifikationen bzgl. der Vliesschicht sowie deren Verarbeitung zu dem Laminat die Brandbeständigkeit des Laminats dadurch entsprechend zu erhöhen.

Vor dem Hintergrund der obigen Erläuterungen schlägt es die Lehre des Anspruchs 1 daher vor, das Laminat derart auszubilden, dass die Klebeschicht zusätzlich eine Schicht aus einem Vliesstoff enthält, wobei der Vliesstoff überwiegend aus nicht brennbaren Fasern besteht, wobei die Fasern einen Schmelzbereich haben, der über dem Schmelzpunkt des Materials der Deckschichten liegt, wobei die Schicht aus Vliesstoff zur Verfestigung der Fasern Bindemittel enthält oder thermisch verfestigt ist, insbesondere durch Beimischung thermoplastischer Fasern, wobei die Schicht aus Vliesstoff eine Beschichtung bzw. eine Schlichte zur Erhöhung der Adhäsion gegenüber der wenigstens einen Polymerschicht der Klebeschicht aufweist, wobei der Kern Füllstoffe oder/und Kurzfaser aufweist, wobei der Füllstoffanteil zwischen 60 Gew.-% und 98 Gew.-%, vorzugsweise mehr als 90 Gew.-% beträgt, und wobei der Kern einen Brennwert von weniger als 15MJ/kg, vorzugsweise weniger als 3MJ/kg aufweist.

Dabei bewirkt die Verwendung von Bindemittel in der Schicht aus Vliesstoff oder eine thermische Verfestigung der Schicht, insbesondere durch Beimischung thermoplastischer Fasern, eine Verbesserung der Wirkung bzw. der Verarbeitungseigenschaften bei der Herstellung des Laminats. Auch ist es erfindungsgemäß zu einer verbesserten Haftung der Schicht aus Vliesstoff gegenüber der Polymerschicht der Klebeschicht vorgesehen, dass die Schicht aus Vliesstoff eine Beschichtung bzw. eine Schlichte zur Erhöhung der Adhäsion gegenüber der wenigstens einen Polymerschicht der Klebeschicht aufweist. Auch weist der Kern zur Erzielung der gewünschten Brandbeständigkeit Füllstoffe oder/und Kurzfasern auf, wobei der Füllstoffanteil zwischen 60 Gew.-% und 98 Gew.-%, vorzugsweise mehr als 90 Gew.-% beträgt, wobei der Kern einen Brennwert von weniger als 15 MJ/kg, vorzugsweise weniger als 3 MJ/kg aufweist, wobei die Schicht entweder auf der dem Kern zugewandten Seite der Klebeschicht oder zwischen zwei Polymerschichten der Klebeschicht angeordnet ist, und wobei die Schicht aus dem Vliesstoff ein Flächengewicht zwischen 10g/qm und 90g/qm aufweist.

Vorteilhafte Weiterbildungen des erfindungsgemäßen Laminats sind in den Unteransprüchen aufgeführt.

Die Schicht aus Vliesstoff kann grundsätzlich sowohl isotrope Eigenschaften als auch anisotrope Eigenschaften aufweisen, wobei es bevorzugt vorgesehen ist, dass die Schicht aus Vliesstoff isotrope Eigenschaften aufweist.

Bevorzugt sind darüber hinaus Deckschichten mit einer Dicke zwischen 0,2mm und 1mm vorgesehen.

Auch hinsichtlich der Verbindung der Deckschichten zur Klebeschicht gibt es unterschiedliche Möglichkeiten, wobei besonders bevorzugt ist, wenn die Deckschichten auf der der Klebeschicht zugewandten Seite eine Oxydationsschicht oder einer Vorbehandlung oder/und eine Primerschicht zur Verbesserung der Haftung und Korrosionsbeständigkeit aufweist/aufweisen.

Weitere Vorteile, Merkmale und Einzelheiten der Erfindung ergeben sich aus der nachfolgenden Beschreibung bevorzugter Ausführungsformen der Erfindung sowie anhand der Zeichnungen.

Kurze Beschreibung der Zeichnungen
- Fig. 1: zeigt einen vereinfachten Querschnitt durch den Schichtaufbau eines Laminats, bei der eine Schicht aus einem Vliesstoff auf der dem Kern des Laminats zugewandten Seite angeordnet ist, wobei die einzelnen Schichten des Laminats der besseren Erkennbarkeit halber getrennt voneinander angeordnet sind,
- Fig. 2: einen gegenüber Fig. 1 modifizierten Schichtaufbau des Laminats, bei dem die Schicht aus dem Vliesstoff zwischen zwei Polymerschichten einer Klebeschicht angeordnet ist,
- Fig. 3: eine vereinfachte Seitenansicht der Anordnung bei der Durchführung eines Brandtests und
- Fig. 4a bis Fig. 4c: eine Tabelle mit Gegenüberstellungen unterschiedlicher Laminate gemäß dem Stand der Technik und mit einem Vlies ausgestatteter Laminate, die einem Brandtest gemäß der Fig. 3 ausgesetzt wurden.

### Ausführungsformen der Erfindung

Gleiche Elemente sind in den Figuren mit den gleichen Bezugsziffern versehen.

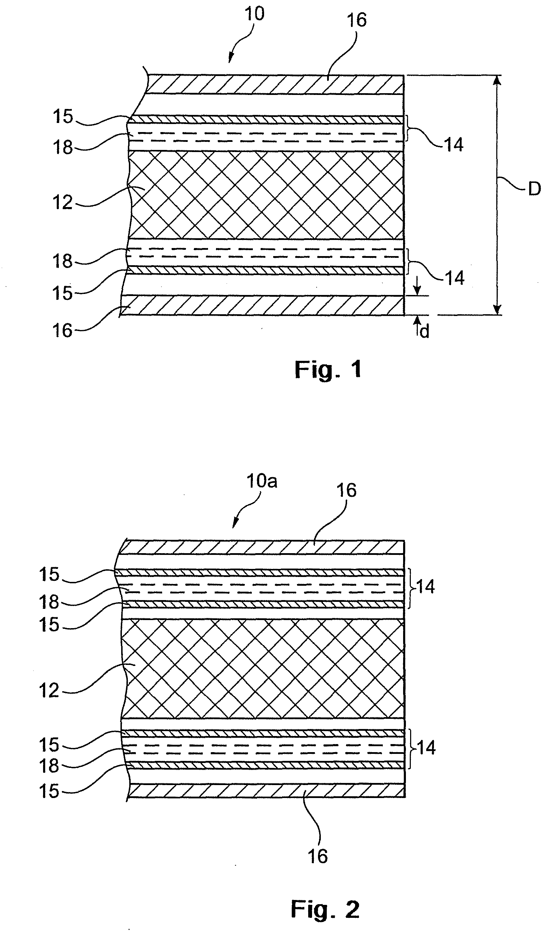

Das in der Fig. 1 dargestellte Laminat 10 dient als Bestandteil von Fassadenverkleidungen oder Ähnlichem an Gebäuden. Hierzu lässt sich das Laminat 10 durch nachgeschaltete Bearbeitungsschritte, beispielsweise Einfräsen von V-förmigen Nuten und Abkanten, zu rechteckförmigen Kassettenelementen umformen, die mittels geeigneter Befestigungssysteme beispielsweise an der Außenfassade eines Gebäudes befestigt werden können.

Das Laminat 10, das insgesamt eine Dicke D zwischen 2mm und 8mm, ganz besonders bevorzugt zwischen 3mm und 6mm aufweist, besteht im Wesentlichen aus einem Kern 12, der beidseitig über jeweils eine Klebeschicht 14 mit einer metallischen Deckschicht 16 verbunden ist.

Typischerweise werden die Laminate 10 als großflächige Elemente mit Abmessungen von beispielsweise 2,0m x 1,0m bis zu 2,0m x 8,0m verwendet, so dass das Verhältnis der Dicke D zur Fläche F kleiner als 2mm/m² ist.

Die Klebeschicht 14 besteht insbesondere aus Polyethylen, Polypropylen, Polybuten, Ethylencopolymeren wie zum Beispiel einem EthylenVinylacetat-Copolymer, einem Ethylen-Acrylsäure-Copolymer, einem Ethylen-Methacrylsäure-Copolymer, einem Ethylen-Butylacrylat-Copolymer, Polystyrol, Polyvinylbutyral, Polyester, thermoplastischem Polyurethan, Polyvinylchlorid, Polyacrylaten und -methacrylaten, sowie deren Copolymeren, Blends und reaktiven Modifikationen, Polyethersulfonen, Polyamidimiden, Polyetherimiden oder Polyimiden.

Die beiden Deckschichten 16 können beispielsweise aus Aluminium, Kupfer, Zink, Titan, Stahl und deren Legierungen, bevorzugt aus Aluminium, bestehen und haben typischerweise eine Dicke d zwischen 0,2mm und 1,0mm. Die Deckschichten 16 können an ihrer dem Kern 12 abgewandten Außenseite entweder blank sein oder oberflächenbehandelt. Beispielhaft kann die Oberflächenbehandlung durch eine Lackierung, Eloxierung, Bedampfung, galvanische Abscheidung von Schichten, Feuerverzinkung und/oder eine Plattierung erfolgen. Ferner kann es auf der der Klebeschicht 14 zugewandten Seite der Deckschicht 16 vorgesehen sein, dass zur Verbesserung der Haftung und Korrosionsbeständigkeit neben blanken Oberflächen eine dünne anodische Oxidationsschicht ausgebildet ist, oder die Deckschicht 16 mit einer Vorbehandlung oder/und einer Primerschicht versehen ist.

Als Material für die Primerschicht kommt beispielsweise Polyurethan, Polyester, Epoxid, Polysiloxan, Polyacrylat, und dessen Copolymere, Polyvinylacetal oder Celluloseether zur Anwendung.

Die Klebeschicht 14 umfasst bei dem in der Fig. 1 dargestellten Ausführungsbeispiel eine einzige Polymerschicht 15, welche über eine Folienkaschierung, über eine Extrusionsbeschichtung, über einen Walzen- oder Düsenauftrag auf die Deckschicht 16 oder durch Coextrusion auf den Kern 12 aufgebracht werden kann. Insgesamt weist die Klebeschicht 14 ein Flächengewicht von weniger als 1000g/qm auf.

Die Klebeschicht 14 ist darüber hinaus bei dem in der Fig. 1 dargestellten Ausführungsbeispiel auf der dem Kern 12 zugewandten Seite mit einer Schicht 18 aus einem Vliesstoff, zum Beispiel aus Kurzfaser- oder Endlosfaservliesstoffen bestehend, verbunden. Die Schicht 18 bzw. der Vliesstoff besteht überwiegend aus nicht brennbaren Fasern, z.B. aus A-Glas, C-Glas, E-Glas, S-Glas, T-Glas, Basaltfasern oder Keramikfasern mit einem Schmelzbereich, der über dem Schmelzpunkt der Deckschicht 16 liegt. Weiterhin kann die Schicht 18 zur Verfestigung geringe Mengen eines Bindemittels enthalten oder mechanisch oder thermisch, z.B. über die Beimengung von thermoplastischen Fasern, verfestigt sein. Die thermoplastischen Fasern bestehen beispielsweise aus Polyethylen, Polypropylen, Polyester oder Polyamid.

Bei der Verwendung eines Bindemittels kann dieses zum Beispiel auf Basis von Harnstoff/Formaldehyd, Melamin/Formaldehyd, Phenol/Formaldehyd, Furfurylalkohol/Formaldehyd, Polyacrylaten oder thermoplastischen Bindemitteln bestehen.

Die Schicht 18 bzw. der Vliesstoff besitzt ein Flächengewicht zwischen 10g/qm und 90g/qm, und kann aus Endlosfasern oder einem Gemenge von Einzelfaserabschnitten bestehen. Auch kann der Vliesstoff bzw. die Schicht 18 ebenfalls eine Beschichtung bzw. Schlichte zur Verbesserung der adhäsiven Eigenschaften gegenüber der Polymerschicht 15 der Klebeschicht 14 aufweisen.

Der Kern 12 enthält ein thermoplastisches Polymer, welches mit anorganischen Füllstoffen oder/und Kurzfasern gefüllt sein kann.

Bei Verwendung eines thermoplastischen Polymers besteht der Kern 12 beispielhaft aus Polyethylen, Polypropylen, Polybuten, Polyvinylchlorid, Polyvinylidenchlorid, Polystyrol, Polyethylenterephthalat, Polyamid, Polysiloxan, Polyoxymethylen, Cellulosepolymeren, Polyvinylacetalen, Polyacrylaten und -methacrylaten, Polyethersulfonen, Polyamidimiden, Polyimiden sowie Copolymeren, Blends, funktionalisierten Polymeren, gepfropften Polymeren oder Modifikationen derer.

Der Füllstoff kann beispielsweise aus einem Material auf anorganischer Basis wie Aluminiumhydroxid, Magnesiumhydroxid, Kalk, Leichtfüllstoff wie z.B. Hohlglaskugeln, Blähglas, Perlit, Cenosphären, Calciumborat, Bariumsulfat, Hydrotalcit, rotem Phosphor, Quarzsand, Ammoniumpolyphosphat, Talk, Antimontrioxid, Zinkhydroxystannat, Zinkborat, Böhmit, Calciumhydroxid, Nesquehonit, Hydromagnesit, Huntit, Halloysit, Kaolin, Wollastonit, Eisenoxidhydrat, Blähgraphit, Schichtsilikaten oder Gemischen daraus bestehen. Auch können zusätzlich Additive wie phosphororganische Verbindungen, Melamin, Farbpigmente, halogenierte Verbindungen oder Stabilisatoren vorgesehen sein.

Bei der Verwendung von Kurzfasern im Kern 12 bestehen diese zum Beispiel aus A-Glas, C-Glas, E-Glas, S-Glas, T-Glas, R-Glas, Basaltfasern oder Polymeren.

Besonders brandfeste Plattenmaterialien zeichnen sich durch Kernmaterialien mit einem Füllstoffanteil zwischen 60 Gew.-% und 98 Gew.- %, vorzugsweise mehr als 90 Gew.-% aus und besitzen Brennwerte kleiner 15 MJ/kg, vorzugsweise kleiner 3MJ/kg.

Das in der Fig. 2 dargestellte Laminat 10a unterscheidet sich von dem Laminat 10 dadurch, dass die Klebeschicht 14 zwei Polymerschichten 15 aufweist, zwischen denen die Schicht 18 aus dem Vliesstoff eingebettet ist.

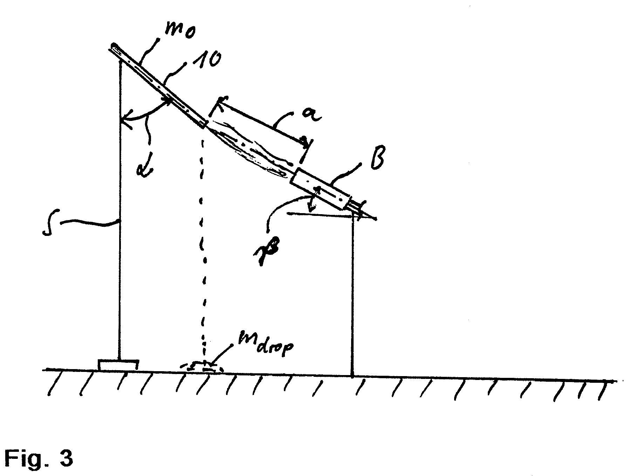

In der Fig.3 ist ein Versuchsaufbau zur Durchführung eines Brandtests dargestellt, mit dem die hohe Brandbeständigkeit von erfindungsgemäß ausgebildeten Laminaten 10 im Vergleich zu Laminaten gemäß dem Stand der Technik nachgewiesen wurde. Der Versuchsaufbau zeigt ein Laminat 10 der Größe 20cm x 30cm, das an einem Ständer S unter einem Winkel α von 45° gegenüber der Vertikalen befestigt ist. In einem Abstand a von 40cm zur Stirnseite des Laminats 10 ist ein Brennerkopf B eines Propangasbrenners (Brennerkopf aus Edelstahl, 60mm Durchmesser) mit einer Leistung von ca. 90kW angeordnet, der 4min lang betrieben wird. Der Brennerkopf B ist mittig zur Stirnseite des Laminats 10 in einem Winkel β von 30° gegenüber der Horizontalen ausgerichtet. Die Masse m₀ des Kerns 12 wurde vor der Durchführung des Brandtests ermittelt, ebenso wie die während des Brandtests heruntergefallene Masse m_{drop} des Laminats 10 nach deren Abkühlung.

Bezüglich der Herstellung der für die Brandtests verwendeten Laminate 10 wird erwähnt, dass deren Kernmischungen durch Mischen der Komponenten in einem Knetaggregat bei 180°C hergestellt und zu einer 2,9mm dicken Kernplatte bei 180°C und 20 bar verpresst wurden. In einem zweiten Schritt wurde das Laminat 10 schichtweise aus den einzelnen Schichten aufgebaut, in einer Presse bei 135°C und 2 bar für 90s verpresst und unter Druck abgekühlt.

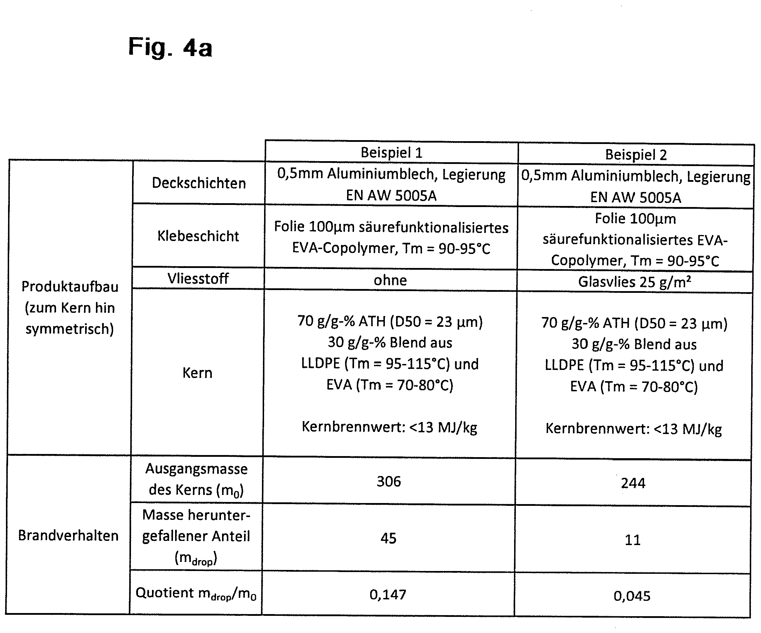

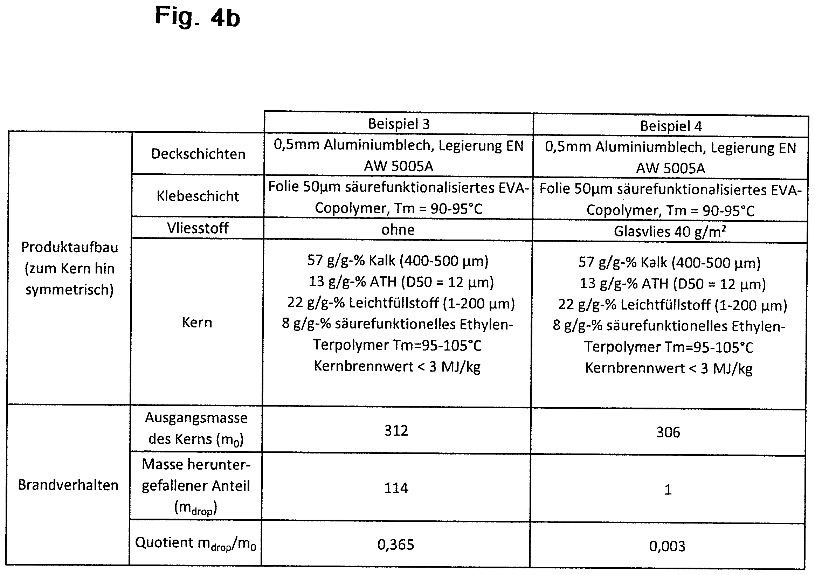

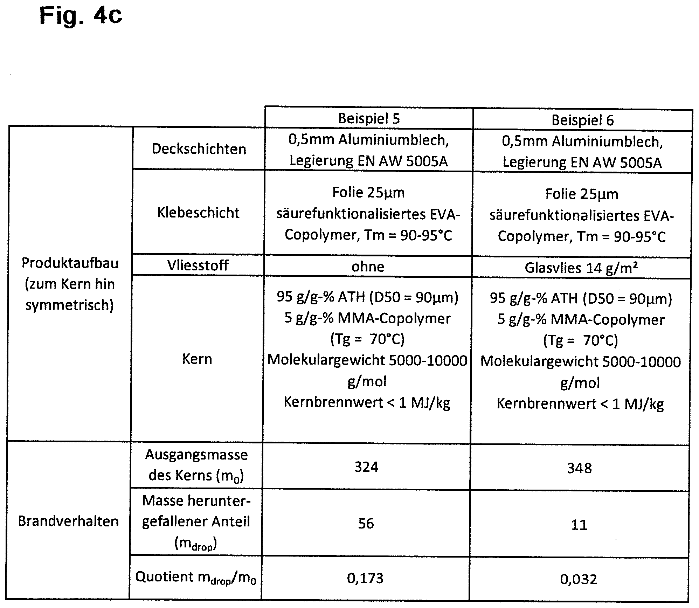

In der Tabelle gemäß der Fig. 4a bis 4c sind die Ergebnisse der Brandtests mit Laminaten gemäß dem Stand der Technik (Beispiele 1, 3 und 5) sowie aus den Laminaten durch aus Vliesstoff bestehende Schichten 18 ergänzte, erfindungsgemäße Laminate 10 (Beispiele 2, 4 und 6) zusammengefasst.

Aus der Tabelle ist ersichtlich, dass durch erfindungsgemäße Verwendung von Vliesen im Laminataufbau nach der Beflammung eine signifikante Reduktion von herabfallenden Teilen, ausgedrückt als Quotient aus der Masse heruntergefallener Anteile m_{drop} zur eingesetzten Masse der Kernplatte m₀, erreicht werden kann. Die erfindungsgemäßen Laminate 10 zeichnen sich durch einen Quotienten m_{drop}/m₀ von kleiner 0,1, bevorzugt kleiner 0,05 aus.

Das soweit beschriebene Laminat 10, 10a kann in vielfältiger Art und Weise abgewandelt bzw. modifiziert werden, ohne vom Erfindungsgedanken abzuweichen. Dieser besteht in der Verwendung einer zusätzlichen Schicht 18 aus einem Vliesmaterial im Bereich zwischen dem Kern 12 mit der jeweiligen Deckschicht 16 in der den Kern 12 mit der Deckschicht 16 verbindenden Klebeschicht 14 zur Erhöhung der Brandbeständigkeit des Laminats 10, 10a.

### Bezugszeichenliste

- 10/a: Laminat
- 12: Kern
- 14: Klebeschicht
- 15: Polymerschicht
- 16: Deckschicht
- 18: Schicht aus Vliesstoff

- D: Dicke des Laminats
- d: Dicke der Deckschicht
- F: Fläche
- S: Ständer
- B: Brennerkopf
- a: Abstand
- m₀: Masse
- m_{drop}: Masse

- α, β: Winkel

## Patentansprüche

1. Laminat (10; 10a), mit einem Kern (12), enthaltend ein thermoplastisches Polymer, mit beidseitig des Kerns (12) angeordneten metallischen Deckschichten (16), wobei die Deckschichten (16) jeweils über eine wenigstens eine Polymerschicht (15) aufweisende Klebeschicht (14) mit dem Kern (12) verbunden sind, wobei die Klebeschicht (14) zusätzlich eine Schicht (18) aus einem Vliesstoff enthält, wobei der Vliesstoff überwiegend aus nicht brennbaren Fasern besteht, wobei die Fasern einen Schmelzbereich haben, der über dem Schmelzpunkt des Materials der Deckschichten (16) liegt, wobei die Schicht (18) aus Vliesstoff zur Verfestigung der Fasern Bindemittel enthält oder thermisch verfestigt ist, insbesondere durch Beimischung thermoplastischer Fasern, wobei die Schicht (18) aus Vliesstoff eine Beschichtung bzw. eine Schlichte zur Erhöhung der Adhäsion gegenüber der wenigstens einen Polymerschicht (15) der Klebeschicht (14) aufweist, wobei der Kern (12) Füllstoffe oder/und Kurzfasern aufweist, wobei der Füllstoffanteil zwischen 60 Gew.-% und 98 Gew.-%, vorzugsweise mehr als 90 Gew.-% beträgt, wobei der Kern (12) einen Brennwert von weniger als 15MJ/kg, vorzugsweise weniger als 3MJ/kg aufweist, wobei die Schicht (18) entweder auf der dem Kern (12) zugewandten Seite der Klebeschicht (14) oder zwischen zwei Polymerschichten (15) der Klebeschicht (14) angeordnet ist, und wobei die Schicht (18) aus Vliesstoff ein Flächengewicht zwischen 10g/qm und 90g/qm aufweist.

2. Laminat nach Anspruch 1,
**dadurch gekennzeichnet,**
**dass** das Laminat (10) eine Dicke (D) zwischen 2mm und 8mm, vorzugsweise zwischen 3mm und 6mm aufweist.

3. Laminat nach Anspruch 1 oder 2,
**dadurch gekennzeichnet,**
**dass** die Deckschichten (16) auf der dem Kern (12) abgewandten Seite eine Oberflächenbehandlung in Form einer Lackierung oder Eloxierung aufweisen.

4. Laminat nach einem der Ansprüche 1 bis 3,
**dadurch gekennzeichnet,**
**dass** die Schicht (18) aus Vliesstoff isotrope Eigenschaften aufweist.

5. Laminat nach einem der Ansprüche 1 bis 4,
**dadurch gekennzeichnet,**
**dass** die Deckschichten (16) auf der der Klebeschicht (14) zugewandten Seite vorbehandelt sind und/oder eine Primerschicht aufweisen.

6. Laminat nach einem der Ansprüche 1 bis 5,
**dadurch gekennzeichnet,**
**dass** die Deckschichten (16) eine Dicke (d) zwischen 0,2mm und 1,0mm aufweisen.

7. Laminat nach einem der Ansprüche 1 bis 6,
**dadurch gekennzeichnet,**
**dass** der Vliesstoff aus A-Glas, C-Glas, E-Glas, S-Glas, T-Glas, Basaltfasern oder Keramikfasern besteht.

8. Laminat nach einem der Ansprüche 1 bis 7,
**dadurch gekennzeichnet,**
**dass** die Klebeschicht (14) eine einzige Polymerschicht (15) aufweist, welche über eine Folienkaschierung oder eine Extrusionsbeschichtung auf die Deckschicht (16) aufgebracht ist.

9. Laminat nach einem der Ansprüche 2 bis 8,
**dadurch gekennzeichnet,**
**dass** das Laminat (10) ein Format mit einer Breite und einer Länge zwischen 2,0m x 1,0m und 2,0m x 8,0m aufweist, und dass das Verhältnis zwischen der Dicke (D) und der Fläche (F) des Laminats (10) kleiner als 2mm/m² beträgt.

10. Laminat nach einem der Ansprüche 1 bis 9,
**dadurch gekennzeichnet,**
**dass** nach einem Brandtest mit einem Gasbrenner mit einer Leistung von mehr als 50 kW das Verhältnis aus der Masse (m_{drop}) der durch den Brandtest heruntergefallenen Anteile zur ursprünglichen Masse (m₀) des Kerns (12) kleiner als 0,1, vorzugsweise kleiner als 0,05 ist.

## Claims

1. A laminate (10; 10a) comprising a core (12) containing a thermoplastic polymer and having metal cover layers (16) disposed on either side of the core (12), the cover layers (16) each being connected to the core (12) via an adhesive layer (14) comprising at least one polymer layer (15), the adhesive layer (14) additionally containing a layer (18) made of a non-woven fabric, the non-woven fabric consisting mainly of incombustible fibers, the fibers having a melting range above the melting point of the material of the cover layers (16), the layer (18) of non-woven fabric containing binder for strengthening the fibers or being thermally strengthened, in particular by an admixture of thermoplastic fibers, the layer (18) of non-woven fabric having a coating or a sizing for increasing the adhesion to the at least one polymer layer (15) of the adhesive layer (14), the core (12) comprising fillers or/and short fibers, the filler content being between 60 wt% and 98 wt%, preferably more than 90 wt%, the core (12) having a calorific value of less than 15 MJ/kg, preferably less than 3 MJ/kg, the layer (18) being disposed either on the side of the adhesive layer (14) facing the core (12) or between two polymer layers (15) of the adhesive layer (14), and the layer (18) of non-woven fabric having a mass per unit area between 10 g/m² and 90 g/m².

2. The laminate according to claim 1,
**characterized in that**
the laminate (10) has a thickness (D) between 2 mm and 8 mm, preferably between 3 mm and 6 mm.

3. The laminate according to claim 1 or 2,
**characterized in that**
the cover layers (16) have a surface treatment in the form of a paint or an anodization on the side facing away from the core (12).

4. The laminate according to any one of claims 1 to 3,
**characterized in that**
the layer (18) of non-woven fabric has isotropic properties.

5. The laminate according to any one of claims 1 to 4,
**characterized in that**
the cover layers (16) are pretreated and/or have a primer layer on the side facing the adhesive layer (14).

6. The laminate according to any one of claims 1 to 5,
**characterized in that**
the cover layers (16) have a thickness (d) between 0.2 mm and 1.0 mm.

7. The laminate according to any one of claims 1 to 6,
**characterized in that**
the non-woven fabric consists of A-glass, C-glass, E-glass, S-glass, T-glass, basalt fibers, or ceramic fibers.

8. The laminate according to any one of claims 1 to 7,
**characterized in that**
the adhesive layer (14) comprises a single polymer layer (15), which is applied to the cover layer (16) by film lamination or extrusion coating.

9. The laminate according to any one of claims 2 to 8,
**characterized in that**
the laminate (10) has a format with a width and a length between 2.0 m × 1.0 m and 2.0 m × 8.0 m, and that the ratio between the thickness (D) and the area (F) of the laminate (10) is less than 2 mm/m².

10. The laminate according to any one of claims 1 to 9,
**characterized in that**
after a fire test using a gas burner having a power of more than 50 kW, the ratio of the mass (m_{drop}) of the portions which have fallen down because of the fire test to the initial mass (m₀) of the core (12) is less than 0.1, preferably less than 0.05.

## Revendications

1. Stratifié (10 ; 10a) comprenant un noyau (12) contenant un polymère thermoplastique et ayant des couches de recouvrement (16) métalliques disposées des deux côtés du noyau (12), dans lequel chaque couche de recouvrement (16) est reliée au noyau (12) via une couche adhésive (14) ayant au moins une couche polymère (15), dans lequel la couche adhésive (14) en outre contient une couche (18) d'un tissu non tissé, dans lequel le tissu non tissé est composé principalement de fibres incombustible, dans lequel les fibres ont une plage de fusion qui est au-dessus du point de fusion du matériau des couches de recouvrement (16), dans lequel la couche (18) d'un tissu non tissé contient des liants pour renforcer les fibres ou est renforcée thermiquement, notamment par une adjonction de fibres thermoplastiques, dans lequel la couche (18) d'un tissu non tissé a un revêtement ou un ensimage pour augmenter l'adhérence à l'au moins une couche polymère (15), dans lequel le noyau (12) a des charges ou/et des fibres courtes, dans lequel la teneur en charge est entre 60 % en poids et 98 % en poids, de préférence plus de 90 % en poids, dans lequel le noyau (12) a un pouvoir calorifique de moins de 15 MJ/kg, de préférence moins de 3 MJ/kg, dans lequel la couche (18) soit est disposée sur le côté de la couche adhésive (14) orienté vers le noyau (12) soit entre les deux couches polymères (15) de la couche adhésive (14), et dans lequel la couche (18) d'un tissu non tissé a une masse surfacique entre 10 g/m² et 90 g/m².

2. Stratifié selon la revendication 1,
**caractérisé en ce que**
le stratifié (10) a une épaisseur (D) entre 2 mm et 8 mm, de préférence entre 3 mm et 6 mm.

3. Stratifié selon la revendication 1 ou 2,
**caractérisé en ce que**
les couches de recouvrement (16) ont un traitement de surface sous la forme d'un laquage ou d'une anodisation sur le côté détourné du noyau (12).

4. Stratifié selon l'une quelconque des revendications 1 à 3,
**caractérisé en ce que**
la couche (18) d'un tissu non tissé a des propriétés isotropes.

5. Stratifié selon l'une quelconque des revendications 1 à 4,
**caractérisé en ce que**
les couches de recouvrement (16) sont prétraitées et/ou ont une couche d'apprêt sur le côté orienté vers la couche adhésive (14).

6. Stratifié selon l'une quelconque des revendications 1 à 5,
**caractérisé en ce que**
les couches de recouvrement (16) ont une épaisseur (d) entre 0,2 mm et 1,0 mm.

7. Stratifié selon l'une quelconque des revendications 1 à 6,
**caractérisé en ce que**
le tissue non tissé est composé de verre de type A, verre de type C, verre de type E, verre de type S, verre de type T, fibres de basalte ou fibre céramiques.

8. Stratifié selon l'une quelconque des revendications 1 à 7,
**caractérisé en ce que**
la couche adhésive (14) a une seule couche polymère (15) qui est appliquée sur la couche de recouvrement (16) par un laminage de film ou un revêtement par extrusion.

9. Stratifié selon l'une quelconque des revendications 2 à 8,
**caractérisé en ce que**
le stratifié (10) a un format d'une largeur et une longueur entre 2,0 m × 1,0 m et 2,0 m × 8,0 m, et que le rapport entre l'épaisseur (D) et la surface (F) du stratifié (10) est inférieur à 2 mm/m².

10. Stratifié selon l'une quelconque des revendications 1 à 9,
**caractérisé en ce**
**qu'**après un essai au feu avec un brûleur à gaz ayant une puissance de plus de 50 kW, le rapport de la masse (m_{drop}) des parties tombées à cause de l'essai au feu à la masse initiale (m₀) du noyau (12) est inférieur à 0,1, de préférence inférieur à 0,05.
